# EUROPÄISCHE PATENTSCHRIFT

(11) **EP 2 288 576 B1**
(45) Veröffentlichungstag und Bekanntmachung des Hinweises auf die Patenterteilung: **07.01.2015**
(21) Anmeldenummer: 09761545.4
(22) Anmeldetag: 22.04.2009
(51) Int. Cl.: C01F 5/30, C01F 11/24, F01N 3/20, C01C 1/00, B01J 19/00, B01J 19/12, C09K 5/16

(54) **VORRICHTUNG ZUR FREISETZUNG VON AMMONIAK**
DEVICE FOR RELEASING AMMONIA
DISPOSITIF POUR LIBÉRER DE L'AMMONIAC

(30) Priorität: 10.06.2008 DE 102008002338
(43) Veröffentlichungstag der Anmeldung: 02.03.2011
(73) Patentinhaber: Robert Bosch GmbH, 70442 Stuttgart (DE)
(72) Erfinder: GLOECKLE, Markus, 70192 Stuttgart (DE); BUERGLIN, Markus, 71254 Ditzingen (DE)
(86) Internationale Anmeldenummer: PCT/EP2009/054784
(87) Internationale Veröffentlichungsnummer: WO 2009/149982

(56) Entgegenhaltungen:
- US-A- 4 595 774
- US-A- 4 906 258
- US-A- 5 283 219
- US-A- 5 569 534
- WANG K ET AL: "Effective thermal conductivity of expanded graphite-CaCl2 composite adsorbent for chemical adsorption chillers" ENERGY CONVERSION AND MANAGEMENT, ELSEVIER SCIENCE PUBLISHERS, OXFORD, GB LNKD- DOI:10.1016/J.ENCONMAN.2005.09.005, Bd. 47, Nr. 13-14, 1. August 2006 (2006-08-01), Seiten 1902-1912, XP025067235 ISSN: 0196-8904 [gefunden am 2006-08-01]

## Beschreibung

Die Erfindung betrifft eine Vorrichtung zur Freisetzung von Ammoniak aus einer Ammoniak speichernden Basis-Substanz mit den im Oberbegriff des Anspruchs 1 genannten Merkmalen einerseits und ein entsprechendes Verfahren zur Freisetzung von Ammoniak aus einer Ammoniak speichernden Basis-Substanz mit den im Oberbegriff des Anspruchs 7 genannten Merkmalen andererseits.

### Stand der Technik

Eine Vorrichtung beziehungsweise ein Verfahren zur Freisetzung von Ammoniak aus einer Ammoniak speichernden Basis-Substanz der eingangs genannten Art sind im Allgemeinen bekannt. Besagte Vorrichtung und das zugehörige Verfahren kommen bevorzugt zur Entstickung von Abgasen bei Dieselmotoren, insbesondere von Fahrzeugen, in Verbindung mit einem Reduktionskatalysator zur selektiven katalytischen Nox-Reduktion (SCR) in sauerstoffhaltigen Abgasen zum Einsatz. Hierzu wird Ammoniak (NH₃) in Metallsalzen, wie beispielsweise MgCl₂ oder CaCl₂, gespeichert und bei Bedarf thermisch ausgetrieben. Das so zurückgewonnene molekulare Ammoniak kann in der Folge in das Abgas dosiert werden. Zur Austreibung des Ammoniaks aus dem Metallsalz muss der Metallsalzspeicher auf eine material- und beladungsabhängige Mindesttemperatur gebracht werden. Hierbei ist insbesondere darauf zu achten, dass bei einem teilweise entladenen Speicher die Mindesttemperatur auch im Speicherinneren erreicht wird, um das Ammoniak zuverlässig auszutreiben und nicht nur von warmen Zonen zu kalten Zonen umzulagern.

Bis zur Dosierbereitschaft, das heißt bis einer ausreichenden Durchwärmung des Metallsalzspeichers, muss somit Energie und Zeit aufgewendet werden, wodurch im Fahrzeugbetrieb bestimmte Nachteile entstehen können. Zum einen ist eine zusätzliche und damit Aufwand verursachende elektrische Heizung mit einer lokal begrenzten Wärmeeinbringung vorzusehen, da diese Art der Speicheraufheizung unter dem Gesichtspunkt gering zu haltender Fertigungskosten und eines möglichst hohen Wirkungsgrades die beste Variante darstellt. Zum anderen ist zu berücksichtigen, dass Metallsalze naturgemäß nur eine sehr geringe Wärmeleitfähigkeit besitzen, so dass bei einem Motorstart eine stark inhomogene Temperaturverteilung innerhalb des Metallsalzes vorliegt. Ferner ist zu berücksichtigen, dass gerade bei Personenkraftwagen häufig nur kurze Strecken zurückgelegt werden, wodurch häufige Aufheizphasen des Metallsalzes erforderlich werden. Um derzeitige und vor allem auch zukünftige Abgasvorschriften erfüllen zu können, muss die Vorrichtung beziehungsweise ein damit einhergehendes System so ausgelegt und konstruiert sein, dass die Dosierbereitschaft innerhalb kurzer Zeit erreicht wird.

Zur Entstickung der Abgase von Dieselmotoren ist eine weitere Vorgehensweise bekannt. Hierbei wird Harnstoff in Form einer 32,5 Gew.%-igen, wässrigen Lösung (AdBlue) in das Abgas eingespritzt. Im Abgas und am SCR-Katalysator wird dann aus dem Harnstoff Ammoniak (NH₃) gewonnen respektive die Bildung von Ammoniak im Abgas hervorgerufen, welches selektiv an dem SCR-Katalysator mit den im Abgas enthaltenen Stickoxiden (NOₓ) zu molekularem Stickstoff und Wasser reagiert. Die Verwendung der AdBlue-Technologie weist jedoch gewisse Nachteile auf, wonach Harnstoff oder ein Folgeprodukt daraus im Abgas kristallisieren, die wässrige Lösung an sich gefrieren und/oder eine Erwärmung des Abgases auf eine vergleichsweise hohe Mindesttemperatur zur Erzeugung von Ammoniak aus der wässrigen Lösung erforderlich sein kann.

Die US 5569534 beschreibt Reaktanden für thermochemische Systeme, welche Graphitelemente enthalten.

Die US 5283219 offenbart ebenfalls in diesem Zusammenhang die Verwendung von Graphit.

### Offenbarung der Erfindung

Die erfindungsgemäße Vorrichtung zur Freisetzung von Ammoniak aus einer Ammoniak speichernden Basis-Substanz mit den im Anspruch 1 genannten Merkmalen bietet demgegenüber den Vorteil, dass mit wenig Aufwand und geringen Kosten der Zeit- und Energieaufwand bis zur Erreichung der Dosierbereitschaft reduziert werden kann. Dabei ist die Basis-Substanz mit einer Zusatz-Substanz versehen, die eine höhere Wärmeleitfähigkeit als die Basis-Substanz aufweist. Mit anderen Worten wird die Wärmeleitfähigkeit des Ammoniak speichernden Materials dadurch erhöht, dass ein Hilfsstoff in das Speichermaterial mit einer besseren Wärmeleitfähigkeit eingebracht wird. Durch die günstigen thermischen Eigenschaften der Zusatz-Substanz lässt sich unter Wärmeeinwirkung die Basis-Substanz auf einfache Weise und mit einer außerordentlichen Effizienz auf eine Vorgabetemperatur thermostatisieren, wodurch die Dosierbereitschaft innerhalb kurzer Zeit erreicht und gasförmiges Ammoniak zur Entstickung der Abgase bereitgestellt wird. Letztlich kann ein vorschriftenkonformer Betrieb einer Dieselmaschine, insbesondere als Teil eines Kraftfahrzeugs, gewährleistet werden. Gleiches gilt in analoger Weise für das Verfahren mit den Merkmalen des Anspruchs 7.

In der Erfindung ist es vorgesehen, dass die Basis-Substanz in Form eines Metallsalzes, insbesondere Pulver- oder Press-Metallsalz, ausgebildet ist. Metallsalze, wie beispielsweise MgCl₂ oder CaCl₂, eignen sich hervorragend zur Speicherung von Ammoniak, das durch eine gezielte Temperierung des Salzes wieder ausgetrieben respektive freigesetzt werden kann.

In der Erfindung ist es weiter vorgesehen, dass die Zusatz-Substanz in Form von zumindest einem Metallelement, insbesondere Metallspan, Metallstab oder Metallplättchen, ausgebildet ist. Das Metallelement besitzt eine deutlich höhere Wärmeleitfähigkeit als die Basis-Substanz respektive als das Metallsalz und kann auf einfache Weise zu geringen Stückkosten in Serie hergestellt werden.

Gemäß einer vorteilhaften Ausgestaltung der Erfindung ist es vorgesehen, dass das zumindest eine Metallelement aus Leichtmetall gebildet ist. Bei der Verwendung von Leichtmetallen, insbesondere Aluminium, kann von einer besonders hohen Wärmeleitfähigkeit bei einer geringen Masse profitiert werden. Aluminium weist gegenüber MgCl₂ eine etwa dreißigfache Wärmeleitfähigkeit auf.

Nach einer bevorzugten Ausgestaltung der Erfindung ist es vorgesehen, dass das zumindest eine Halb-Metallelement aus Graphit gebildet ist. Bei dem Werkstoff Graphit können dessen Gitterebenen so ausgerichtet werden, dass eine längere Erstreckung jedes einzelnen Teilchens in einer Ebene der besseren Wärmeleitfähigkeit zu liegen kommt, also letztlich die höhere Leitfähigkeit des Graphits entlang seiner Schichten gezielt genutzt wird.

Nach einer weiteren bevorzugten Ausgestaltung der Erfindung ist es vorgesehen, dass die Zusatz-Substanz in Form von zumindest einem Duo-Metallelement, insbesondere Duo-Metallspan, Duo-Metallstab oder Duo-Metallplättchen, ausgebildet ist. Dadurch lässt sich eine Kombination magnetischer und wärmeleitender Eigenschaften erzielen.

In einer vorteilhaften Ausgestaltung der Erfindung ist es vorgesehen, dass das zumindest eine Duo-Metallelement aus einem mit Aluminium beschichteten Eisenelement oder aus einem mit Eisen beschichteten Aluminiumelement gebildet ist. Hierbei kann beispielsweise das Eisenelement mit einer Schicht aus Aluminium umschlossen werden, indem das Eisenelement in flüssiges Aluminium getaucht und anschließend unter die Schmelztemperatur des Aluminiums abgekühlt wird. Umgekehrt kann genauso ein gut wärmeleitendes Leichtmetallelement, insbesondere Aluminiumspan, auf elektrochemischem Weg mit einem Überzug aus Eisen versehen wird.

In einer weiteren vorteilhaften Ausgestaltung der Erfindung ist es vorgesehen, dass die Zusatz-Substanz thermisch aufheizbar und/oder magnetisch ausrichtbar ist. Anhand der thermischen Aufheizung der Zusatz-Substanz kann ein Wärmeenergieeintrag in beide Substanzen stattfinden, wobei anhand der magnetischen Ausrichtung Bestandteile der Zusatz-Substanz orthogonal zu einer Heizquelle ausgerichtet werden können, um den Wärmetransport in unbeheizte Zonen hinein weiter zu erhöhen.

Vorteilhaft ist es zudem, eine Heizung und/oder einen Magnetfeld-Generator vorzusehen, wodurch alle erforderlichen Funktionseinheiten für einen eigenständigen Betrieb der Vorrichtung gegeben sind.

### Kurze Beschreibung der Zeichnungen

Die Erfindung sowie vorteilhafte Ausgestaltungen gemäß den Merkmalen der weiteren Ansprüche werden im Folgenden anhand der in den Zeichnungen dargestellten Ausführungsbeispiele näher erläutert, ohne dass insoweit eine Beschränkung der Erfindung erfolgt; diese umfasst vielmehr alle Abwandlungen, Änderungen und Äquivalente, die im Rahmen der Ansprüche möglich sind. Es zeigen:
- Figur 1: exemplarisch einen in der Draufsicht abgebildeten runden Ammoniak-Speicher mit unausgerichteten Spänen einer Zusatz-Substanz in einer schematischen Darstellung;
- Figur 2: exemplarisch einen in der Draufsicht abgebildeten runden Ammoniak-Speicher mit orthogonal zu einer Heizquelle ausgerichteten Spänen einer Zusatz-Substanz in einer schematischen Darstellung; und
- Figur 3: exemplarisch einen in der Seitenansicht abgebildeten runden oder eckigen Ammoniak-Speicher mit orthogonal zu einer Heizquelle ausgerichteten Spänen einer Zusatz-Substanz in einer schematischen Darstellung.

### Ausführungsform(en) der Erfindung

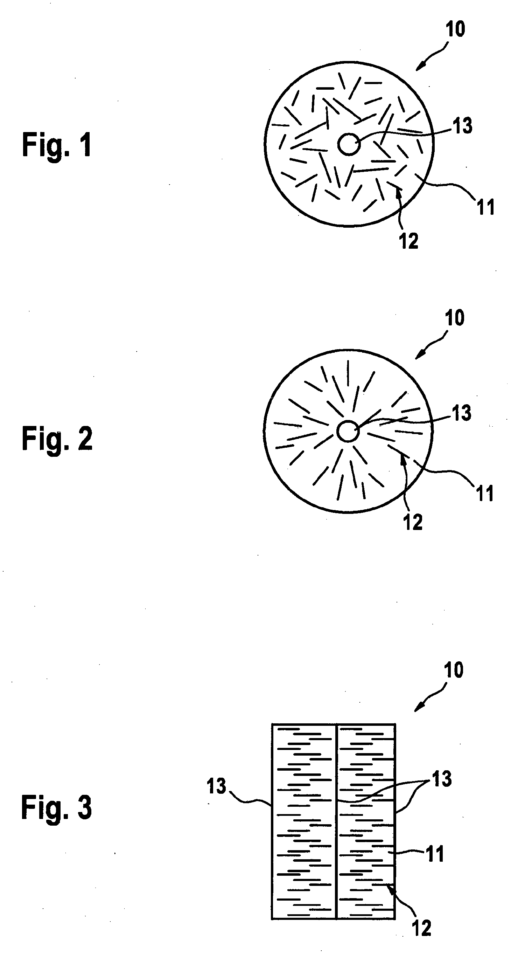

In Figur 1 ist eine Vorrichtung 10 zur Freisetzung von Ammoniak aus einer Ammoniak speichernden Basis-Substanz 11 gezeigt. Die Vorrichtung 10 ist neben der Basis-Substanz 11 mit einer Zusatz-Substanz 12 befüllt. Die Basis-Substanz 11 besteht aus einem Metallsalz, beispielsweise MgCl₂ oder CaCl₂, und wird daher auch als Metallsalzspeicher respektive Ammoniak-Speicher bezeichnet. Die Zusatz-Substanz 12, welche einem Hilfsstoff, wie zum Beispiel Metallspäne, gleichkommt, ist in die Basis-Substanz 11 eingebracht und untergemischt. Ein derartiger Hilfsstoff besitzt eine höhere Wärmeleitfähigkeit als das Metallsalz, wobei durch eine geeignete Formgebung und Ausrichtung des Hilfsstoffes die Wärmeleitfähigkeit des Verbundes aus Metallsalz und Hilfsstoff weiter erhöht werden kann. Vorzugsweise im Zentrum der Vorrichtung 10 ist eine Wärmequelle 13 angeordnet, über welche der Materialverbund beheizt werden kann.

Bei der Auswahl der Materialien des Hilfsstoffes sind bestimmte Kriterien zu beachten. Hierbei ist von besonderer Bedeutung, dass der Hilfsstoff eine bessere Wärmeleitfähigkeit als das Metallsalz aufweist und chemisch weitgehend inert gegenüber einer Reaktion mit Ammoniak unter reduzierenden Bedingungen ist. Weitere bevorzugte Eigenschaften sind eine geringe Dichte zwecks Gewichtsersparnis und ein niedriger Werkstoffpreis. Ferner ist es von Vorteil, wenn der Hilfsstoff im Metallsalz geometrisch gezielt ausgerichtet werden kann. Die Ausrichtung des Hilfsstoffes gemäß den Figuren 2 und 3 ist bevorzugt dergestalt, dass die Längsrichtung der Hilfsstoffteilchen orthogonal zu der Heizquelle 13 stehen, um den Wärmetransport in nichtbeheizte Zonen zu erhöhen.

Gemäß Figur 2 ist einer weitere Vorrichtung 10 zur Freisetzung von Ammoniak aus einer Ammoniak speichernden Basis-Substanz 11 gezeigt. Die Vorrichtung 10 ist entsprechend Figur 1 neben der Basis-Substanz 11 mit der Zusatz-Substanz 12 befüllt. Die Basis-Substanz 11 ist auch nach diesem Ausführungsbeispiel ein Metallsalz, beispielsweise MgCl₂ oder CaCl₂. Die vorab erwähnte Zusatz-Substanz 12 in Form eines Hilfsstoffes, wie zum Beispiel Metallspäne, ist in die Basis-Substanz 11 eingebracht und untergemischt. Der Hilfsstoff besitzt eine höhere Wärmeleitfähigkeit als das Metallsalz, wobei durch eine geeignete Formgebung und Ausrichtung des Hilfsstoffes die Wärmeleitfähigkeit des Verbundes aus Metallsalz und Hilfsstoff weiter erhöhbar ist. Im Zentrum der Vorrichtung 10 ist die Wärmequelle 13 angeordnet, über welche der Materialverbund beheizt werden kann. Im Unterschied zu dem Ausführungsbeispiel gemäß Figur 1 sind Teilchen, insbesondere Späne, des Hilfsstoffes orthogonal zu der Heizquelle 13 ausgerichtet. Zur Ausrichtung der Hilfsstoffteilchen kann ein Magnetfeld dienen.

Nach Figur 3 ist auch eine Ausführungsform der Vorrichtung 10 zur Freisetzung von Ammoniak aus einer Ammoniak speichernden Basis-Substanz 11 gezeigt. Die Vorrichtung 10 ist entsprechend den Figuren 1 und 2 neben der Basis-Substanz 11 mit der Zusatz-Substanz 12 befüllt. Die Basis-Substanz 11 ist auch nach diesem Ausführungsbeispiel ein Metallsalz, beispielsweise MgCl₂ oder CaCl₂. Die vorab erwähnte Zusatz-Substanz 12 in Form eines Hilfsstoffes, wie zum Beispiel Metallspäne, ist in die Basis-Substanz 11 eingebracht und untergemischt. Der Hilfsstoff besitzt eine höhere Wärmeleitfähigkeit als das Metallsalz, wobei durch eine geeignete Formgebung und Ausrichtung des Hilfsstoffes die Wärmeleitfähigkeit des Verbundes aus Metallsalz und Hilfsstoff weiter erhöht werden kann. Im Unterschied zu der Variante nach Figur 2 sind neben der zentralen Wärmequelle 13 weitere, zueinander beabstandete Wärmequellen 13 angeordnet, über welche der Materialverbund beheizbar ist. Auch hierbei sind die Teilchen, insbesondere Späne, des Hilfsstoffes orthogonal zu der Heizquelle 13 ausgerichtet. Zur Ausrichtung der Hilfsstoffteilchen kann wiederum ein Magnetfeld dienen.

Generell, das heißt mit Bezug auf alle vorgenannten Figuren, sind bei der Formgebung der Hilfsstoffe einige Aspekte zu berücksichtigen. So ist beispielsweise eine geringe Masse und ein geringes Volumen des jeweiligen Hilfsstoffes von Vorteil, da sich dadurch auch ein geringes Gesamtgewicht beziehungsweise ein geringes Gesamtvolumen des Ammoniak-Speichers erzielen lässt. Weiterhin kann eine große räumliche Erstreckung eines einzelnen Hilfsstoff-Teilchens einen guten Wärmetransport über eine relativ große Strecke gewährleisten. Eine besonders hohe Wärmeleitfähigkeit bei gleichzeitig geringer Masse besitzen Leichtmetalle, wie zum Beispiel Aluminium. So weist Aluminium gegenüber MgCl₂ eine 30-fach höhere Wärmeleitfähigkeit auf. Neben Aluminium sind jedoch grundsätzlich auch Kupfer, Silber oder auch Graphit einsetzbar. Ferner sorgt eine große Oberfläche der Hilfsstoff-Teilchen für eine gute Wärmeaufnahme und für eine gute Wärmeabgabe von dem jeweiligen Hilfsstoff-Teilchen an das Metallsalz. Hieraus ergibt sich, dass dünne, langgestreckte Platten oder dünne, lange Stäbe besonders geeignet sind. Späne und insbesondere nadelförmige Späne zählen ebenfalls zu den geeigneten Formen.

Die Kombination von magnetischen und wärmeleitenden Materialeigenschaften kann beispielsweise dadurch erfolgen, dass ein die Wärme gut leitender Span oder dergleichen aus Aluminium auf elektrochemischem Weg mit einem Überzug aus Eisen versehen wird. Umgekehrt kann genauso ein dünner Span aus Eisen mit einer Schicht aus Aluminium umschlossen werden. Dies kann sehr einfach dadurch erfolgen, dass der Eisenkern in flüssiges Aluminium getaucht und anschließend unter die Schmelztemperatur des Aluminiums abgekühlt wird.

Wird das Ammoniak speichernde Material 11 nicht als Pulver, sondern als Pressling eingesetzt, so werden die die Wärmeleitfähigkeit verbessernden Hilfsstoffteilchen, zum Beispiel Späne oder dergleichen, dem Ammoniak speichernden Material 11 vor dem Verpressen untergemischt und gegebenenfalls vorher geometrisch ausgerichtet. Diese Ausrichtung kann beispielsweise durch Anlegen eines orthogonal zur Heizquelle ausgerichteten Magnetfeldes und der Verwendung von magnetischen Hilfsstoffteilchen erfolgen.

Zusammenfassend bezieht sich die vorliegende technische Lösung auf eine Vorrichtung 10, insbesondere Metallsalzspeicher zum Einsatz in der SCR-Technik, zur Freisetzung von Ammoniak aus einer Ammoniak speichernden Basis-Substanz 11, wobei die Basis-Substanz 11 mit einer Zusatz-Substanz 12 versehen ist, die eine höhere Wärmeleitfähigkeit als die Basis-Substanz 11 aufweist.

## Patentansprüche

1. Vorrichtung (10) zur Freisetzung von Ammoniak, umfassend einen Speicher mit einer Ammoniak speichernden Basis-Substanz (11), **dadurch gekennzeichnet, dass** die Basis-Substanz (11) mit einer Zusatz-Substanz (12) versehen ist, die eine höhere Wärmeleitfähigkeit als die Basis-Substanz (11) aufweist, dass die Basis-Substanz (11) in Form eines Metallsalzes, insbesondere Pulver- oder Press-Metallsalz, ausgebildet ist, und dass die Zusatz-Substanz (12) in Form von zumindest einem Metallelement, insbesondere Metallspan, Metallstab oder Metallplättchen, ausgebildet ist.

2. Vorrichtung (10) nach Anspruch 1, **dadurch gekennzeichnet, dass** das zumindest eine Metallelement aus Leichtmetall gebildet ist.

3. Vorrichtung (10) nach einem der vorhergehenden Ansprüche, **dadurch gekennzeichnet, dass** die Zusatz-Substanz (12) in Form von zumindest einem Duo-Metallelement, insbesondere Duo-Metallspan, Duo-Metallstab oder Duo-Metallplättchen, ausgebildet ist.

4. Vorrichtung (10) nach einem der vorhergehenden Ansprüche, **dadurch gekennzeichnet, dass** das zumindest eine Duo-Metallelement aus einem mit Aluminium beschichteten Eisenelement oder aus einem mit Eisen beschichteten Aluminiumelement gebildet ist.

5. Vorrichtung (10) nach einem der vorhergehenden Ansprüche, **dadurch gekennzeichnet, dass** die Zusatz-Substanz (12) thermisch aufheizbar und/oder magnetisch ausrichtbar ist.

6. Vorrichtung (10) nach einem der vorhergehenden Ansprüche, **dadurch gekennzeichnet, dass** eine Heizung (13) und/oder ein Magnetfeld-Generator vorgesehen sind.

7. Verfahren zur Freisetzung von Ammoniak aus einer Ammoniak speichernden Basis-Substanz (11), **dadurch gekennzeichnet, dass** die Basis-Substanz (11) mit einer Zusatz-Substanz (12) versehen wird, die eine höhere Wärmeleitfähigkeit als die Basis-Substanz (11) aufweist, wobei die Basis-Substanz (11) in Form eines Metallsalzes, insbesondere Pulver- oder Press-Metallsalz, ausgebildet ist, und wobei die Zusatz-Substanz (12) in Form von zumindest einem Metallelement, insbesondere Metallspan, Metallstab oder Metallplättchen, ausgebildet ist.

## Claims

1. Device (10) for releasing ammonia, comprising a storage means having an ammonia-storing base substance (11), **characterized in that** the base substance (11) has been provided with an additive substance (12) having a higher thermal conductivity than the base substance (11), **in that** the base substance (11) takes the form of a metal salt, especially pulverulent or compressed metal salt, and **in that** the additive substance (12) takes the form of at least one metal element, especially metal turning, metal rod or metal blank.

2. Device (10) according to Claim 1, **characterized in that** the at least one metal element is formed from lightweight metal.

3. Device (10) according to either of the preceding claims, **characterized in that** the additive substance (12) takes the form of at least one bimetallic element, especially bimetallic turning, bimetallic rod or bimetallic blank.

4. Device (10) according to any of the preceding claims, **characterized in that** the at least one bimetallic element is formed from an aluminium-coated iron element or an iron-coated aluminium element.

5. Device (10) according to any of the preceding claims, **characterized in that** the additive substance (12) can be thermally heated and/or magnetically aligned.

6. Device (10) according to any of the preceding claims, **characterized in that** a heating means (13) and/or a magnetic field generator are provided.

7. Method for releasing ammonia from an ammonia-storing base substance (11), **characterized in that** the base substance (11) is provided with an additive substance (12) having a higher thermal conductivity than the base substance (11), the base substance (11) taking the form of a metal salt, especially pulverulent or compressed metal salt, and the additive substance (12) taking the form of at least one metal element, especially metal turning, metal rod or metal blank.

## Revendications

1. Dispositif (10) pour libérer de l'ammoniac, comprenant un accumulateur avec une substance de base (11) accumulant l'ammoniac, **caractérisé en ce que** la substance de base (11) est dotée d'une substance d'appoint (12), qui présente une conductibilité thermique plus élevée que la substance de base (11), **en ce que** la substance de base (11) est réalisée sous la forme d'un sel de métal, en particulier un sel de métal en poudre ou comprimé, et **en ce que** la substance d'appoint (12) est réalisée sous la forme d'au moins un élément métallique, en particulier de copeaux métalliques, d'une barre métallique ou de plaquettes métalliques.

2. Dispositif (10) selon la revendication 1, **caractérisé en ce que** ledit au moins un élément métallique est formé d'un métal léger.

3. Dispositif (10) selon l'une quelconque des revendications précédentes, **caractérisé en ce que** la substance d'appoint (12) est réalisée sous la forme d'au moins un élément métallique duo, en particulier des copeaux métalliques duo, une barre métallique duo ou des plaquettes métalliques duo.

4. Dispositif (10) selon l'une quelconque des revendications précédentes, **caractérisé en ce que** ledit au moins un élément métallique duo est formé par un élément de fer revêtu d'aluminium ou par un élément d'aluminium revêtu de fer.

5. Dispositif (10) selon l'une quelconque des revendications précédentes, **caractérisé en ce que** la substance d'appoint (12) peut être chauffée thermiquement et/ou orientée magnétiquement.

6. Dispositif (10) selon l'une quelconque des revendications précédentes, **caractérisé en ce qu'**il est prévu un chauffage (13) et/ou un générateur de champ magnétique.

7. Procédé pour libérer de l'ammoniac à partir d'une substance de base (11) accumulant l'ammoniac, **caractérisé en ce que** la substance de base (11) est dotée d'une substance d'appoint (12), qui présente une conductibilité thermique plus élevée que la substance de base (11), la substance de base (11) étant réalisée sous la forme d'un sel de métal, en particulier un sel de métal en poudre ou comprimé, et la substance d'appoint (12) étant réalisée sous la forme d'au moins un élément métallique, en particulier des copeaux métalliques, une barre métallique ou des plaquettes métalliques.
